# EUROPEAN PATENT SPECIFICATION

(11) **EP 2 026 645 B1**
(45) Date of publication and mention of the grant of the patent: **29.08.2012**
(21) Application number: 07732721.1
(22) Date of filing: 08.05.2007
(51) Int. Cl.: A01G 9/02, A01G 23/04

(54) **PLANT CONTAINERS**
PFLANZENBEHÄLTER
RÉCIPIENTS POUR PLANTES

(30) Priority: 10.06.2006 GB 0611540
(43) Date of publication of application: 25.02.2009
(73) Proprietor: Single, Suzanne W., Midlothian EH37 5XT (GB)
(72) Inventor: SINGLE, James, Midlothian EH37 5XT (GB); GORDON, Peter, Ayrshire KA5 5HW (GB)
(74) Representative: Peter, Kenneth William
(86) International application number: PCT/GB2007/001693
(87) International publication number: WO 2007/141472

(56) References cited:
- EP-A- 1 444 883
- WO-A-01/35722
- WO-A-2005/011361
- NL-C1- 1 011 796
- US-A- 4 939 865
- US-A- 5 241 784

## Description

### Field of the invention

The present invention relates to containers for the propagation and growth of plants, sections of material suitable for forming such containers and processes of forming such sections of material.

### Background to the invention

Plant containers having apertures formed in their sides and bases are known. As a plant grows in such a container, the plant's roots grow towards the apertures and in so doing are exposed to increasingly more air and thus eventually become dehydrated. Dehydration causes the roots to wither. This process is called air pruning.

A plant container having an air pruning facility is disclosed in US Patent 4,939,865 (Whitcomb et al). This patent discloses a container for growing plants, which is formed of flexible sections of material having a lattice of corresponding recesses and protuberances. The sections of material are formed into a cylindrical container such that the protuberances are on the outer surface of the container. Each corresponding protuberance and recess has an aperture. In use, plant roots grow into the recesses and through the apertures where the root tip dehydrates and is air pruned.

Improvements to the abovementioned container are described in WO 2005/011361, which discloses a plant container comprising at least one section of flexible material having an inner surface formed by an array of recesses and protuberances. At least some of the recesses narrow to an aperture to provide for air pruning. The outer surface is also formed in part by an array of recesses and protuberances. Figure 1 shows the container of WO 2005/011361 in cross-section. The plant container 1 of Figure 1 has compost 3 around the root 7 of plant 5. The contoured sides 9 of the plant container, which are formed from one or more sections of material, contain a number of laterally extending protuberances 11. The sections of material are formed by mechanical deformation of a sheet of plastics material. The protuberances extend at approximately 90° to the square cross section cylindrical geometry of the plant container. The protuberances 11 guide the roots towards apertures formed at the end of recesses between the protuberances.

The present inventor has appreciated shortcomings of the above known containers. The present inventor has further appreciated that such known containers may not provide for effective guidance of roots towards the apertures where air pruning takes place.

It is therefore an object for the present invention to provide an improved plant container.

It is a further object for the present invention to provide a plant container configured to provide for improved guidance of roots towards apertures formed in the container.

### Statement of invention

In the light of the above mentioned appreciation the present inventor has devised a plant container, which according to a first aspect, comprises at least one section of material, the at least one section of material being configured to define a space having a plant receiving end, the at least one section of material having an inner surface and an outer surface, the inner surface defining a plurality of recesses, each of which narrows towards an aperture, and a plurality of protuberances, characterised in that each recess being defined in part by first and second substantially opposing surfaces such that the recess is asymmetric in form.

In use, the protuberances on the inner surface guide roots into recesses and the asymmetry of the recesses guide the growth of roots in desired directions.

More specifically, a base of each recess may be defined in part by a first edge and in part by a second edge, which opposes the first edge, and the aperture may be closer to the first edge than the second edge, the container being configured such that the second edge is closer to the plant receiving end than the first edge.

More specifically, the first surface may extend away from the first edge to an aperture and the second surface may extend away from the second edge to the aperture. In use, plant roots are guided into the recesses as the plant roots grow downwards away from the plant receiving end.

Alternatively or in addition, the first and second surfaces of each recess may extend away from the aperture at different inclinations to a plane defined by the aperture.

Alternatively or in addition, each recess may define a second aperture from which the recess narrows towards the first aperture. The second aperture may be defined in part by each of the first and second edges of the recess. More specifically, each recess may be configured such that the first and second apertures are disposed eccentrically in relation to each other. A recess may be asymmetric when viewed from a side of the recess.

Alternatively or in addition, one of the first and second surfaces may be of greater length than the other of the first and second surfaces.

Alternatively or in addition, each of the plurality of protuberances may define an apex, the plurality of the thus defined apexes defining an apex plane. Where the container is of cylindrical form, the apex plane may define a cylinder.

More specifically, the first surface of each recess may extend away from the apex plane at a first inclination and the second surface may extend towards the apex plane at a second inclination, the first inclination being less than the second inclination. Thus, in use of the container, the first surface may extend in an upward direction away from the apex plane and the second surface may extend in a downward direction away from the apex plane.

Alternatively or in addition, each protuberance may be asymmetric in form. Each protuberance may comprise one or more features of a recess.

Alternatively or in addition, an apex of each of the plurality of protuberances may be defined by a domed surface.

Alternatively or in addition, the plurality of protuberances may be interspersed amongst the plurality of recesses.

More specifically, the first and second surfaces of each recess may be formed at least in part by surfaces of the protuberances, such as protuberances adjacent the recess.

Alternatively or in addition, a plurality of protuberances, such as four protuberances, may be disposed around each recess.

More specifically, the plurality of protuberances may be disposed regularly around each recess. Thus, adjacent protuberances around a recess may be substantially equally spaced apart from each other.

Alternatively or in addition, at least one of the plurality of recesses and the plurality of protuberances may be formed as an array.

In a form, adjacent recesses of the array of recesses may be substantially equally spaced apart from each other and adjacent protuberances of the array of protuberances may be substantially equally spaced apart from each other.

More specifically, each of the array of recesses and the array of protuberances may comprise a plurality of rows and a plurality of columns.

More specifically, protuberances may alternate in the array with recesses.

More specifically, one of the plurality of rows and columns of recesses may be misaligned with an adjacent, corresponding one of rows and columns of protuberances.

More specifically, each protuberance may be closer to a first recess than a second recess, the first and second recesses being adjacent and in the same row of recesses.

Alternatively or in addition, each row of the plurality of rows of at least one of the recesses and the protuberances may extend diagonally across the section of material. Thus, the rows may each describe a helical path on the inner surface of the container, when the container is formed as a cylinder.

Alternatively or in addition, a width may be substantially the same for each of at least one of: the plurality of recesses; and the plurality of protuberances.

In another form, at least one of recesses of the array of recesses and of protuberances of the array of protuberances may be irregularly spaced apart from each other.

More specifically, each of the array of recesses and the array of protuberances may comprise a plurality of rows and a plurality of columns.

More specifically, one of the plurality of rows and columns of recesses may be misaligned with an adjacent, corresponding one of rows and columns of protuberances.

More specifically, each protuberance may be closer to a first recess than a second recess, the first and second recesses being adjacent and in the same row of recesses.

Alternatively or in addition, spacing between adjacent recesses may increase progressively from a side of the section of material towards an opposing side of the section of material. Thus, rows of recesses may describe curved paths across the section of material.

Alternatively or in addition, spacing between adjacent protuberances may increase progressively from a side of the section of material towards an opposing side of the section of material. Thus, rows of protuberances may describe curved paths across the section of material.

Alternatively or in addition, a width of each of at least one of: the plurality of recesses; and the plurality of protuberances may progressively increase across the section of material.

Alternatively or in addition, at least one of: the plurality of recesses; and the plurality of protuberances may be of substantially a same depth.

Alternatively or in addition, at least one of: the plurality of recesses; and the plurality of recesses may be of substantially a same shape. More specifically, the same shape may be conical.

Alternatively or in addition, the outer surface may define a plurality of recesses and a plurality of protuberances.

More specifically, each of the plurality of recesses may be at substantially a same disposition on the section of material as a corresponding protuberance on the inner surface. Thus, where recesses on the outer surface and protuberances on the inner surface are formed by deformation of the section of material, a surface of the protuberance may oppose a surface defining the recess.

Alternatively or in addition, each of the plurality of protuberances may be at substantially a same disposition on the section of material as a corresponding recess on the inner surface. Thus, where protuberances on the outer surface and recesses on the inner surface are formed by deformation of the section of material, a surface defining the recess may oppose a surface of the protuberance.

Alternatively or in addition, towards a middle portion of the container (i.e. where a growing medium is present and adjacent the inner surface of the container) the recesses may comprise medium sized apertures. A medium sized first aperture may be defined as having a surface area of between about 6% and about 20% of an area of a base of a recess. The area of the base may be chosen in dependence on the species of plant to be contained in the container.

Alternatively or in addition, recesses towards an end of the container opposing the plant receiving end (e.g. below the base where a base is present as part of the container) may have apertures of large diameter. A large diameter aperture is defined as having a surface area of between about 10% and about 50% of an area of a base of a recess. Apertures below the base may increase air circulation and thereby aid air root pruning.

Alternatively or in addition, each of the protuberances (on the inner surface) may comprise an aperture. Such protuberances comprising apertures may be located towards an end of the container opposing the plant receiving end. More specifically, where the container comprises a base, such protuberances comprising apertures may be located on a side of the base opposite the plant receiving end (i.e. underneath the base). The apertures in the protuberances may provide for increased air circulation.

Alternatively or in addition, apertures of at least one of recesses and protuberances may be of different diameters across the section of material.

Alternatively or in addition, the section of material may be configured such that recesses towards the plant receiving end have no aperture. Thus, a water reservoir may be formed near the plant receiving end to, in use, reduce the likelihood of irrigation water being lost from the container before it reaches compost contained in the container.

Alternatively or in addition, the section of material may be configured to form a cylindrical container.

Alternatively or in addition, the section of material may be formed at least in part of flexible material.

Alternatively or in addition, the at least one section of material may be formed as a quadrilateral having two acute angles and two obtuse angles. Thus, a diagonal join can be formed, which may extend partly around the container.

Alternatively or in addition, the section of material may be formed as the container such that adjacent ends of the at least one section of material overlap. In use, a portion of an end of the section of material, i.e. that part including an acute angle of the quadrilateral, can be 'peeled back'. This can allow the contents of the container to be removed, without causing the container to collapse, as a portion towards an opposing end of the section of material, e.g. towards a base of the container, can remain in the overlapped configuration. A further advantage is that inspection of the contents of the container can be undertaken by peeling back a portion of the material of the container along the diagonal join.

Alternatively or in addition, a portion of the section of material may be devoid of recesses.

More specifically, the portion may be at or near the plant receiving end of the container.

Alternatively or in addition, the quadrilateral may be a parallelogram.

Alternatively or in addition, the quadrilateral may have at least one curved side.

Alternatively or in addition, the container may be configured such that an end of the container opposing the plant receiving end may be narrower than the plant receiving end. Thus, the container may be frustroconical in form.

Alternatively or in addition, the acute angles of the quadrilateral may be between about 30 degrees and about 60 degrees. More specifically, the acute angles may be about 45 degrees. A 45 degree angle has been found to provide superior performance under certain circumstances.

Alternatively or in addition, the container may comprise at least one fastener configured to fasten edges of the section of material together to maintain the form of the container.

More specifically, the fastener may be integrally formed with the section of material.

Alternatively or in addition, the container may comprise at least two fasteners operable to fasten edges of the section of material together at spaced apart locations. More specifically, a first fastener may be disposed towards the plant receiving end of the container and a second fastener may be disposed towards an end of the container opposing the plant receiving end. This may allow the first fastener to be released to allow the section of material to be 'peeled back' for inspection of the container contents, while a bottom of the container is held in place around the contents.

Alternatively or in addition, the inner surface of the section of material may further have a second plurality of protuberances, the second plurality of protuberances extending further into the space defined by the container than the first plurality of protuberances.

More specifically, the second plurality of protuberances may extend at least partly around the inner surface of the container and may be disposed towards an end of the container opposing the plant receiving end.

Alternatively or in addition, the container may further comprise a base member, the container being configured such that the second plurality of protuberances engages with and supports the base member.

Alternatively or in addition, the second plurality of protuberances may comprise first and second rows of protuberances extending at least partly around the inner surface of the container.

More specifically and where the container comprises a base member, the first and second rows of protuberances may be spaced apart from each other to receive an edge of the base member between the rows. Thus, the presence of protuberances above and below the edge of the base member resists movement of the base away from or towards the plant receiving end.

Alternatively or in addition, the container may further comprise a base member, which is integrally formed with the section of material.

More specifically, the base member may be connected to the flexible member along part of a circumference of the base member, the connection forming a hinge.

More specifically, the hinge may be a living hinge.

Alternatively or in addition where the outer surface has a first plurality of protuberances, the outer surface may further have a second plurality of protuberances, the second plurality of protuberances extending further away from the outer surface than the first plurality of protuberances, the second plurality of protuberances being disposed in relation to each other such that, in use, they engage with and hold an identification member.

More specifically, the identification member may comprise a section, such as a rectangular section, of one of: card, plastics, metal, wood and the like. The identification member may bear a mark, such as-writing, that identifies a plant contained in the container.

Alternatively or in addition, the second plurality of protuberances may comprise first and second rows of protuberances, which each extend at least partly around the outer surface, the first and second rows of protuberances being spaced apart from each other. Thus, an identification member, such as a piece of cardboard, may be pressed between the rows of protuberances and held in place by the protuberances.

Alternatively or in addition, the section of material may be formed at least in part of a plastics material. The plastics material may be polypropylene, polystyrene or a recycled plastic such as HDPE (High Density Polyethylene) obtained from domestic waste.

More specifically, the plastics material may comprise a pigment, e.g. black pigment.

According to a second aspect of the present invention, there is provided at least one section of material for forming a plant container, the at least one section of material having an inner surface and an outer surface, the inner surface defining a plurality of recesses, each of which narrows towards an aperture, and a plurality of protuberances, characterised in that each recess being defined in part by first and second substantially opposing surfaces such that the recess is asymmetric in form.

Embodiments of the second aspect of the present invention may comprise one or more features of the first aspect of the present invention.

According to a third aspect of the present invention, there is provided a process of forming a section of material, which is configured to be formed as a plant container, the process comprising the steps of:
deforming a section of deformable material to form a plurality of recesses and a plurality of protrusions on an inner surface of the section of material, characterised in that each of the plurality of recesses narrowing towards an apex and being defined in part by first and second substantially opposing surfaces such that the recess is asymmetric in form; and
forming an aperture at the apex of each of the plurality of recesses.

More specifically, the step of deforming a section of deformable material may comprise impressing the deformable material from one side with a plurality of protruding members mounted on a tool (i.e. by mechanical deformation). Thus, each protruding member may form a recess in the material.

More specifically, the step of deforming a section of deformable material may further comprise impressing the deformable material from a second, opposing side with a plurality of protruding members mounted on a tool.

More specifically, the first and second opposing sides of the deformable material may be impressed at substantially a same time. Thus, the step of deforming a section of deformable material may be performed by first and second tools having a plurality of protruding members.

More specifically, the plurality of protruding members of each of the first and second tools may be formed in an array.

More specifically, the adjacent protruding members in the array may be substantially equally spaced from each other.

More specifically, the step of deforming a section of deformable material may comprise impressing the material when the protruding members of the first and second tools are out of registration with each other such that one of rows and columns of protruding members are misaligned with each other.

More specifically, each protruding member of the first tool may be closer to a first protruding member of the second tool than a second protruding member of the second tool, the first and second protruding member being adjacent and in the same row of the second tool.

Alternatively or in addition, the section of material may be deformed by at least one of: vacuum forming; blow moulding; injection moulding. Such techniques can allow for formation of the section of material from thinner material than where the section of material is to be formed by mechanical deformation.

Further embodiments of the third aspect of the present invention may further comprise one or more features of the first aspect of the present invention.

The present inventor has appreciated that the feature of the inner surface of the section of material having a second plurality of protuberances is of wider application than hitherto described.

Where the word plant is used herein the word is intended to cover all plants, including trees, shrubs, conifers, herbaceous plants, perennial plants and annual plants.

### Brief description of drawings

The present invention will now be described by way of example only with reference to the following Figures in which:
Figure 1 shows an example of the prior art plant container in cross section;
Figure 2 shows the cross section of an embodiment of the present invention;
Figure 3 shows the inside surface of a section of flexible material from which an embodiment of the present invention is constructed;
Figures 4a and 4b illustrate protuberances and recesses provided on two different embodiments of a section of flexible material;
Figure 5 shows a cylindrical plant container in accordance with the present invention;
Figures 6a and 6b show the net of a cylindrical plant container having a base attached thereto;
Figure 7 is a cross-sectional view of the plant container of the present invention in use;
Figure 8 shows another embodiment of a plant container; and
Figures 9a and 9b show apparatus used in a process for forming a section of material to be formed as a plant container.

### Specific description

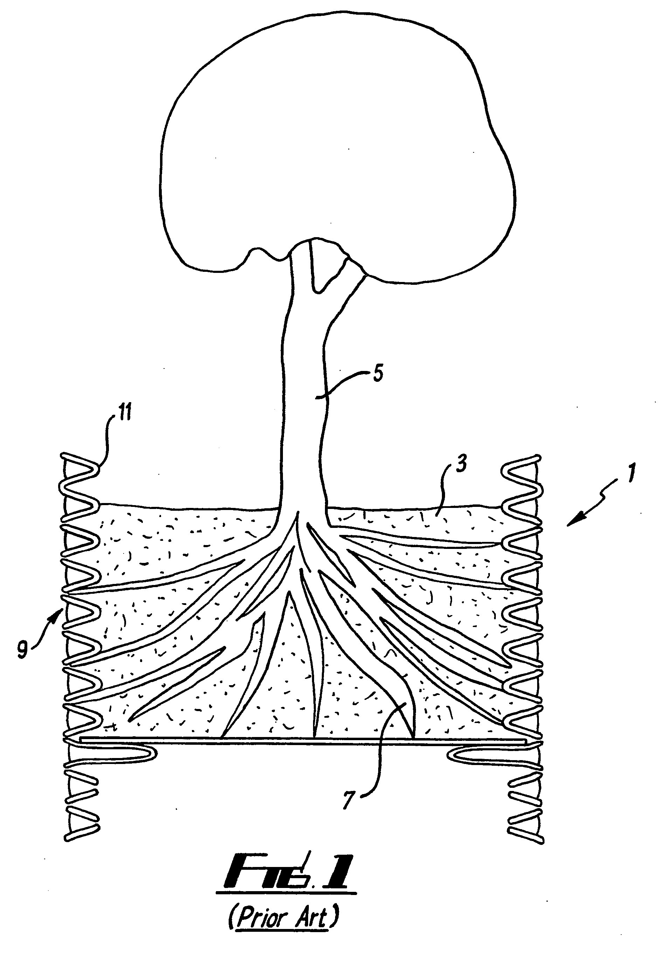

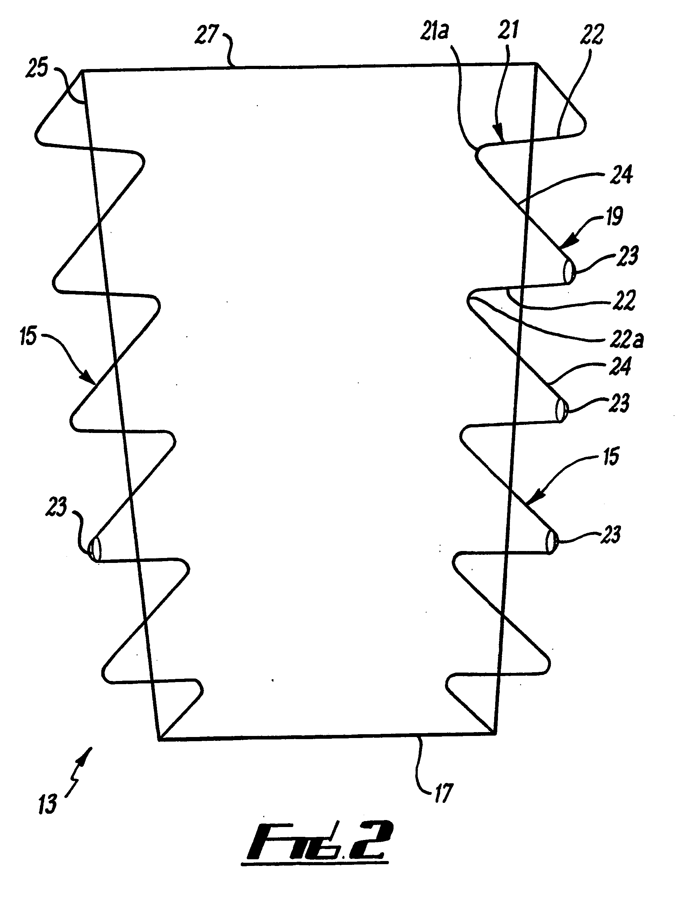

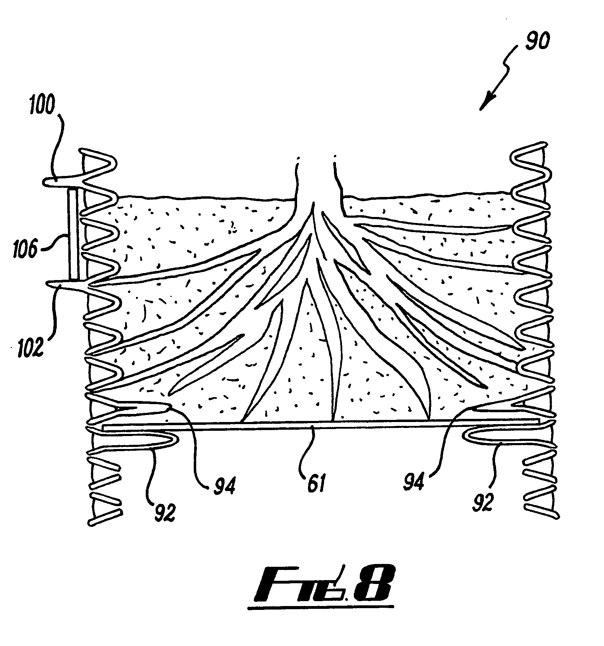

Figure 2 shows the cross section of an embodiment of the present invention. The container profile 13 is shown with contoured sides 15, a base 17 and a top 27, which defines a plant receiving end. The contoured sides 15 comprise a number of recesses 19 arranged with a number of protuberances 21. In this example at least one of the recesses 19 contains an aperture 23 at the end thereof. The aperture 23 allows a root to move into the recess 19 and be air pruned. Line 25 shows the generally cylindrical geometry of the plant container. As can be seen from Figure 2, the top 27 is of larger diameter than the bottom 17. In other forms of the invention the container is of substantially constant diameter, e.g. as shown in Figure 8. The recesses 19 and protuberances 21 are asymmetric and have a lower section 22 (which defines a first surface of a recess) and an upper section 24 (which defines a second surface of a recess). The lower section 22 extends outwardly from a first edge 22a and the upper section 24 extends outwardly from a second edge 21a, the first and second edges defining an extent of a base of a recess 19. The lower section 22 extends out from the first edge away from the centre of the cylinder whereas the upper section 24 extends out from the second edge and is sharply angled towards the top 27 of the cylinder. The lower section 22 is shorter than the upper section 24. Thus, the lower section 22 is of less inclination than the upper section 24. The asymmetric geometry of each recess is such that the recess is more liable to guide a root towards an aperture 23 than, for example, the symmetric recesses of WO 2005/011361, as shown in Figure 1. This is because a root is more liable to grow up the slight incline defined by the lower section 22 than the greater incline defined by a symmetric recess. A lower section of greater incline is more liable to deflect a root towards the centre of the container. The greater incline defined by the upper section 24 increases an extent of the lower section 22 presented to a root that is growing downwards from the top 27 of the container. The increased extent of the lower section 22 presented to the root increases the likelihood of the lower section directing the root's growth towards the aperture. In addition, the asymmetry of the recesses provides for ease of proper filling of the container with compost. This is because compost accumulates readily on the lower section 22 of each recess. An attendant benefit is that an asymmetric recess is more likely to fill properly with compost compared with a symmetric recess, which may be liable to fill only to the extent that a pocket of air is left along the upper section. Such a pocket of air can hinder growth of a root towards the aperture.

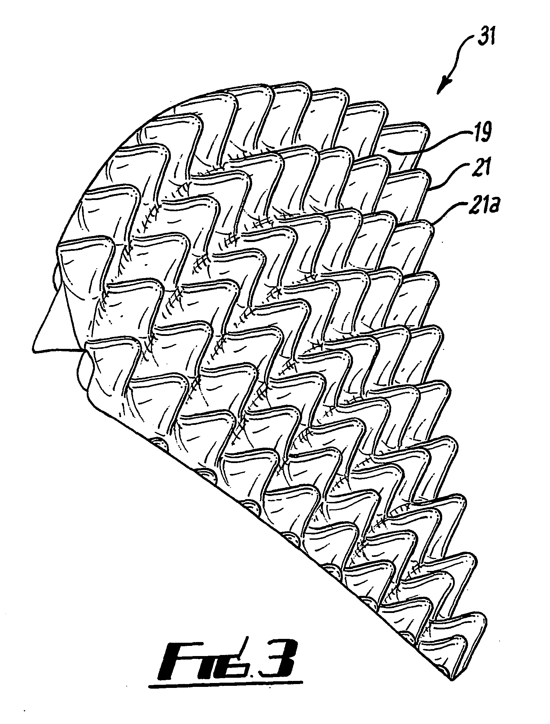

Figure 3 shows a part of a section of material 31 from which the sides 15 of the container of Figure 2 are formed. The section of material is formed from polypropylene, polystyrene or a recycled plastic such as HDPE (High Density Polyethylene) obtained from domestic waste. Figure 3 shows the inner surface of the section of material. The figure shows the protuberances 21, the apexes 21a of the protuberances 21 and the recesses 19. As can be seen from Figure 3, the protuberances are substantially conically shaped, the cones being asymmetric as described above with respect to the recesses. As the section of material is formed from a sheet of material of substantially constant thickness, the reverse side of the section of material of Figure 3 (which forms the outer surface of the container) is defined by recesses and protuberances corresponding respectively, in location and form, to the protuberances and recesses shown in Figure 3. More specifically, an opposing side of a protuberance of the side of material shown in Figure 3 defines a recess. Also, an opposing side of a recess of the side of material shown in Figure 3 defines a protuberance.

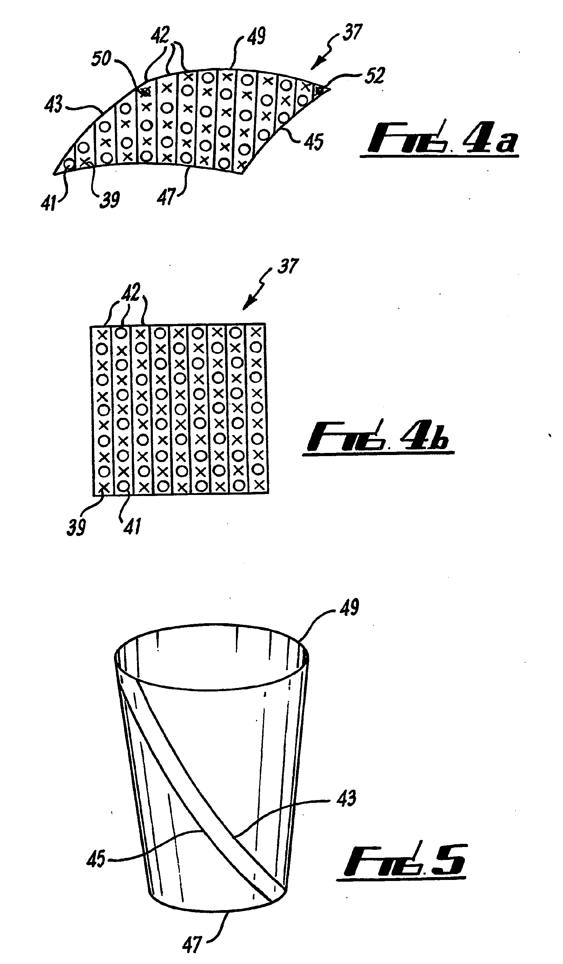

Figure 4a is a schematic depiction of one embodiment of the present invention. In this depiction, the section of material is shown in net form 37 with the "X" 39 illustrating protuberances and the "O" 41 designating recesses with apertures, which are arranged in columns 42. As can be seen from Figure 4a, the protuberances 39 and recesses 41 in each column 42 alternate and are aligned with each other. Within each column 42 each protuberance is closer to one of the immediately adjacent recesses above and below the protuberance, thereby providing for the asymmetry of the protuberances and recesses described above with reference to Figure 2. The outer edges of 43, 45, 47 and 49 of the net 37 of Figure 4a are curved. The curved geometry of the net allows the net to be rolled into a cylindrical shape with a base having a smaller diameter than the plant receiving end.

In one un-illustrated form, the rows of the protuberances and the recesses diverge from one outer edge to an opposing outer edge, e.g. from edge 47 to edge 49. In such a form the divergence of the rows of the protuberances and recesses is achieved by having progressively wider protuberances and recesses from one edge to another edge.

Figure 4b is a schematic depiction of another embodiment of the present invention. In this depiction, the section of material 37 is shown in net form 37 with the "X" 39 illustrating protuberances and the "O" 41 designating recesses with apertures, which are arranged in columns 42. The disposition of protuberances and recesses in the embodiment of Figure 4b is the same as in the embodiment of Figure 4a. More specifically, the protuberances 39 and recesses 41 in each column 42 alternate and are aligned with each other. Within each column 42 each protuberance is closer to one of the immediately adjacent recesses above and below the protuberance, thereby providing for the asymmetry of the protuberances and recesses described above with reference to Figure 2.

The effect of the curved geometry feature of the embodiment of Figure 4a is shown in Figure 5 where edge 47 is shown to be the edge defining the circumference of the base of the cylinder and edge 49 is shown to be the edge that defines the circumference of the top of the cylinder. It is apparent from Figure 5 that the circumference of the plant receiving end 49 is larger than that of the base 47. In addition, it is apparent that the overlap of edges 43 and 45 provides the connection between these edges to allow the formation of the cylinder. In this example, connection means 50 and 52 are integrally formed with the net 37 and are adapted to fit together, forming a releasable connection. Where a container is formed from the section of straight edged material shown in Figure 4b, the container is of substantially constant diameter, e.g. as shown in Figure 8.

In the example of Figures 4a, 4b and 5 the edges 43 and 45 have protuberances 39 arranged along their length. When the net 37 is rolled such that the edges 45 and 43 overlap one set of protuberances arranged along the edge 43 engages with the other set of protuberances along the edge 45. This is achieved by nesting one set of protuberances with the other.

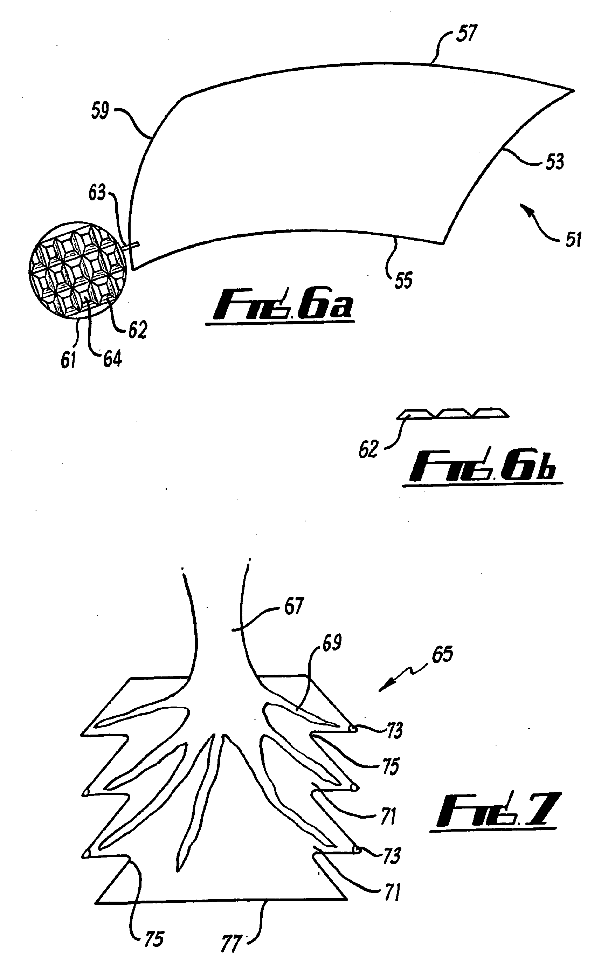

Figure 6a shows a further embodiment of the present invention in which a base 61 is connected to the net 51, similar to the net shown in Figure 4a. The base 61 is connected to the net 51 by means of a living hinge 63. The base 61 contains a series of apertures 64 made in a raised section of the base 61. The apertures are supported by inclined sections 62 that extend from the plane of the base up to the apertures 64. This feature is shown in Figures 6a and 6b. In use the base 61 is twisted about the living hinge 63 from a substantially vertical position to a substantially horizontal position and the net is rolled into a cylindrical shape as described with respect of Figure 4a.

Figure 7 shows an embodiment of the present invention in use. Figure 7 shows a cross section of part of a plant container 65, a plant stem 67, roots 69 and a plurality of recesses 71, apertures 73 and protuberances 75. A base 77 is also shown. As can be seen from Figure 7 the roots are guided by virtue of the asymmetry of the recesses towards the apertures 73 defined at the end of the recesses 71.

Figure 8 shows another embodiment of a plant container 90 having two spaced apart rows of protuberances 92, 94 which extend further into the space defined by the container than the other protuberances. In use, edges of a base, such as the base 61 shown in Figure 6a, are received between the spaced apart rows of protuberances 92, 94, whereby upwards and downwards movement of the base is resisted. The plant container 90 of Figure 8 also comprises two rows of spaced apart protuberances 100, 102 that extend around the outer surface of the container to a sufficient extent to receive a rectangular piece of card 106, which is marked to identify the plant contained in the container.

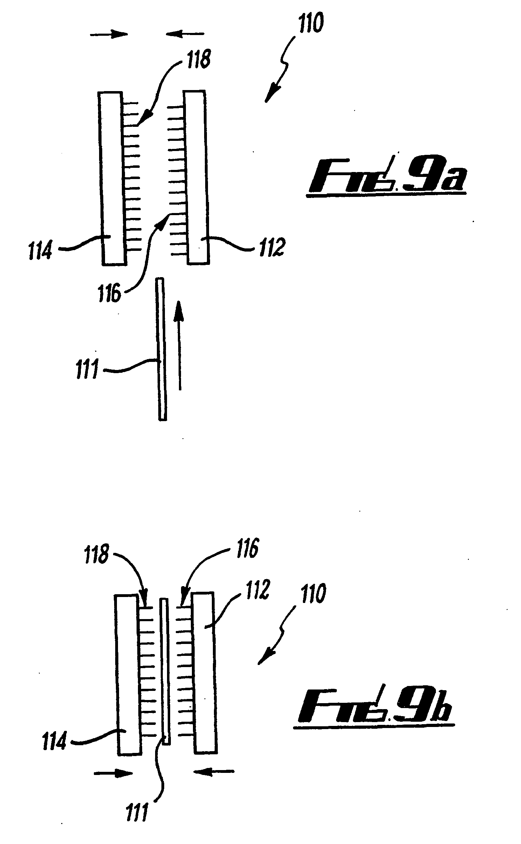

Figures 9a and 9b represent manufacturing apparatus 110 for forming a section of material, which is configured to be formed as a plant container, from a sheet of deformable material 111. The apparatus 110 comprises first and second tools 112, 114, each of which has a regular array of rows and columns of protruding elements 116, 118. As can be seen from the side view of the apparatus shown in Figure 9a, each row of protruding elements of the first tool 112 is out of registration with the corresponding row of protruding elements of the second tool 114, and such that each protruding element of the first tool is closer to a first protruding element of the second tool than a second protruding element of the second tool, the first and second protruding element being adjacent and in the same row of the second tool. Turning now to Figure 9b, which provides an end view of the apparatus 110, the columns of the protruding elements of the first and second tools 112, 114 can be seen to be in line with each other. Thus, when the first and second tools are moved towards each other and such that they maintain their relative dispositions (i.e. from the position shown in Figures 9a and 9b) each protruding element deforms the sheet of deformable material 111 to form the asymmetric recesses and protuberances in the inner and outer surfaces of the material. An aperture is formed at the end of each recess by cutting off the apex of the protrusion on the opposing side of the sheet of material that corresponds to the recess.

## Claims

1. A plant container (13,65) comprising at least one section of material, the at least one section of material being configured to define a space having a plant receiving end (27), the at least one section of material having an inner surface and an outer surface, the inner surface defining a plurality of recesses (19,71), each of which narrows towards an aperture (23,73), and a plurality of protuberances (21,75), **characterised in that** each recess (19,71) being defined in part by first (22) and second (24) substantially opposing surfaces such that the recess (19,71) is asymmetric in form.

2. A plant container (13,65) according to claim 1, in which each recess (19,71) defines a second aperture from which the recess narrows towards the first aperture (23,73) and in which each recess (19,71) is configured such that the first (23,73) and second apertures are disposed eccentrically in relation to each other.

3. A plant container (13,65) according to claim 1 or 2, in which each protuberance (21,75) is asymmetric in form.

4. A plant container (13,65) according to any preceding claim, in which the plurality of protuberances (21,75) are interspersed amongst the plurality of recesses (19,71) and the first and second surfaces of each recess (19,71) are formed at least in part by surfaces of the protuberances (21,75).

5. A plant container (13,65) according to any preceding claim, in which at least one of the plurality of recesses (19,71) and the plurality of protuberances (21,75) are formed as an array, adjacent recesses (19,71) of the array of recesses (19,71) being substantially equally spaced apart from each other and adjacent protuberances (21,75) of the array of protuberances (21,75) being substantially equally spaced apart from each other, each of the array of recesses (19,71) and the array of protuberances (21,75) comprising a plurality of rows and a plurality of columns, and the protuberances (21,75) alternating in the array with recesses (19,71).

6. A plant container (13,65) according to claim 5, in which one of the plurality of rows and columns of recesses (19,71) is misaligned with an adjacent, corresponding one of rows and columns of protuberances (21,75).

7. A plant container (13,65) according to claim 6, in which each protuberance (21,75) is closer to a first recess (19,71) than a second recess (19,71), the first and second recesses being adjacent and in the same row of recesses (19,71).

8. A plant container (13,65) according to any one of claims 5 to 7, in which each row of the plurality of rows of at least one of the recesses (19,71) and the protuberances (21,75) extend diagonally across the section of material.

9. A plant container (13,65) according to any one of claims 1 to 5, in which at least one of the plurality of recesses (19,71) and the plurality of protuberances are formed as an array, at least one of recesses (19,71) of the array of recesses (19,71) and of protuberances (21,75) of the array of protuberances (21,75) being irregularly spaced apart from each other, each of the array of recesses (19,71) and the array of protuberances (21,75) comprising a plurality of rows and a plurality of columns, and one of the plurality of rows and columns of recesses (19,71) being misaligned with an adjacent, corresponding one of rows and columns of protuberances (21,75).

10. A plant container (13,65) according to claim 9, in which each protuberance (21,75) is closer to a first recess (19,71) than a second recess, the first (19,71) and second recesses being adjacent and in a same row of recesses.

11. A plant container (13,65) according to claims 9 or 10, in which spacing between adjacent recesses (19,71) increases progressively from a side of the section of material towards an opposing side of the section of material.

12. A plant container (13,65) according to any one of claims 9 to 11, in which spacing between adjacent protuberances (21,75) increases progressively from a side of the section of material towards an opposing side of the section of material.

13. A plant container (13,65) according to any one of claims 9 to 12, in which a width of each member of at least one of: the plurality of recesses(19,71); and the plurality of protuberances (21,75) progressively increases across the section of material.

14. At least one section of material (31,37) for forming a plant container, the at least one section of material (31,37) having an inner surface and an outer surface, the inner surface defining a plurality of recesses (19,41), each of which narrows towards an aperture (23), and a plurality of protuberances (21,39), **characterised in that** each recess (19,41) being defined in part by first and second substantially opposing surfaces such that the recess (19,41) is asymmetric in form.

15. A process of forming a section of material (31,37), which is configured to be formed as a plant container (13,65), the process comprising the steps of:
deforming a section of deformable material to form a plurality of recesses (19,41,71) and a plurality of protrusions on an inner surface of the section of material, **characterised in that** each of the plurality of recesses (19,41,71) narrowing towards an apex and being defined in part by first and second substantially opposing surfaces such that the recess (19,41,71) is asymmetric in form; and
forming an aperture (23,73), at the apex of each of the plurality of recesses (19,41,71).

## Patentansprüche

1. Pflanzenbehälter (13,65), der wenigstens einen Materialabschnitt aufweist, wobei der wenigstens eine Materialabschnitt so konfiguriert ist, dass er einen Raum mit einem Pflanzenaufnahmeende (27) definiert, wobei der wenigstens eine Materialabschnitt eine Innenfläche und eine Außenfläche hat, wobei die Innenfläche mehrere Aussparungen (19, 71), die sich jeweils in Richtung einer Öffnung (23, 73) verschmälern, und mehrere Vorsprüngen (21, 75) definiert, **dadurch gekennzeichnet, dass** jede Aussparung (19, 71) teilweise durch eine erste (22) und eine dieser im Wesentlichen gegenüberliegende zweite (24) Fläche definiert wird, so dass die Aussparung (19, 71) eine asymmetrische Form hat.

2. Pflanzenbehälter (13, 65) nach Anspruch 1, wobei jede Aussparung (19, 71) eine zweite Öffnung definiert, von der aus sich die Aussparung in Richtung der ersten Öffnung (23, 73) verschmälert, und wobei jede Aussparung (19, 71) so konfiguriert ist, dass die erste (23, 73) und die zweite Öffnung exzentrisch zueinander angeordnet sind.

3. Pflanzenbehälter (13, 65) nach Anspruch 1 oder 2, wobei jeder Vorsprung (21, 75) eine asymmetrische Form hat.

4. Pflanzenbehälter (13, 65) nach einem der vorherigen Ansprüche, wobei die mehreren Vorsprünge (21, 75) zwischen den mehreren Aussparungen (19, 71) verteilt sind und die erste und die zweite Fläche jeder Aussparung (19, 71) wenigstens teilweise von Flächen der Vorsprünge (21, 75) gebildet werden.

5. Pflanzenbehälter (13, 65) nach einem der vorherigen Ansprüche, wobei die mehreren Aussparungen (19, 71) und/oder die mehreren Vorsprünge (21, 75) als eine Abfolge ausgebildet sind, wobei nebeneinanderliegende Aussparungen (19, 71) der Abfolge von Aussparungen (19, 71) im Wesentlichen gleichmäßig voneinander beabstandet sind und wobei nebeneinanderliegende Vorsprünge (21, 75) der Abfolge von Vorsprüngen (21, 75) im Wesentlichen gleichmäßig voneinander beabstandet sind, wobei die Abfolge von Aussparungen (19, 71) und die Abfolge von Vorsprüngen (21, 75) jeweils mehrere Reihen und mehrere Spalten umfassen und die Vorsprünge (21, 75) sich in der Abfolge mit Aussparungen (19, 71) abwechseln.

6. Pflanzenbehälter (13, 65) nach Anspruch 5, wobei eine der mehreren Reihen und Spalten von Aussparungen (19, 71) mit Bezug auf eine angrenzende entsprechende Reihe und Spalte von Vorsprüngen (21, 75) versetzt ist.

7. Pflanzenbehälter (13, 65) nach Anspruch 6, wobei jeder Vorsprung (21, 75) näher an einer ersten Aussparung (19, 71) als eine zweite Aussparung (19, 71) ist, wobei die erste und die zweite Aussparung nebeneinander und in derselben Reihe von Aussparungen (19, 71) liegen.

8. Pflanzenbehälter (13, 65) nach einem der Ansprüche 5 bis 7, wobei jede Reihe der mehreren Reihen von Aussparungen (19, 71) und/oder Vorsprüngen (21, 75) diagonal über den Materialabschnitt verläuft.

9. Pflanzenbehälter (13, 65) nach einem der Ansprüche 1 bis 5, wobei die mehreren Aussparungen (19, 71) und/oder die mehreren Vorsprünge als eine Abfolge ausgebildet sind, wobei die Aussparungen (19, 71) der Abfolge von Aussparungen (19, 71) und/oder die Vorsprünge (21, 75) der Abfolge von Vorsprüngen (21, 75) unregelmäßig voneinander beabstandet sind, wobei die Abfolge von Aussparungen (19, 71) und die Abfolge von Vorsprüngen (21, 75) jeweils mehrere Reihen und mehrere Spalten umfassen und eine der mehreren Reihen und Spalten von Aussparungen (19, 71) mit Bezug auf eine angrenzende entsprechende Reihe und Spalte von Vorsprüngen (21, 75) versetzt ist.

10. Pflanzenbehälter (13, 65) nach Anspruch 9, wobei jeder Vorsprung (21, 75) näher an einer ersten Aussparung (19, 71) als eine zweite Aussparung ist, wobei die erste (19, 71) und zweite Aussparung nebeneinander und in der gleichen Reihe von Aussparungen liegen.

11. Pflanzenbehälter (13, 65) nach den Ansprüchen 9 oder 10, wobei der Abstand zwischen nebeneinanderliegenden Aussparungen (19, 71) von einer Seite des Materialabschnitts in Richtung auf eine gegenüberliegende Seite des Materialabschnitts allmählich zunimmt.

12. Pflanzenbehälter (13, 65) nach einem der Ansprüche 9 bis 11, wobei der Abstand zwischen nebeneinanderliegenden Vorsprüngen (21, 75) von einer Seite des Materialabschnitts in Richtung auf eine gegenüberliegende Seite des Materialabschnitts allmählich zunimmt.

13. Pflanzenbehälter (13, 65) nach einem der Ansprüche 9 bis 12, wobei eine Breite jedes Elements der mehreren Aussparungen (19, 71) und/oder der mehreren Vorsprünge (21, 75) über den Materialabschnitt allmählich zunimmt.

14. Wenigstens ein Materialabschnitt (31, 37) zum Bilden eines Pflanzenbehälters, wobei der wenigstens eine Materialabschnitt (31, 37) eine Innenfläche und eine Außenfläche hat, wobei die Innenfläche mehrere Aussparungen (19, 41), die sich jeweils in Richtung einer Öffnung (23) verschmälern, und mehrere Vorsprünge (21, 39) definiert, **dadurch gekennzeichnet, dass** jede Aussparung (19, 41) teilweise durch eine erste und eine dieser im Wesentlichen gegenüberliegende zweite Fläche definiert wird, so dass die Aussparung (19, 41) eine asymmetrische Form hat.

15. Verfahren zum Bilden eines Materialabschnitts (31, 37), der so konfiguriert ist, dass er zu einem Pflanzenbehälter (13, 65) ausgebildet werden kann, wobei das Verfahren die folgenden Schritte beinhaltet:
Verformen eines Abschnitts von verformbarem Material, um mehrere Aussparungen (19, 41, 71) und mehrere Vorsprünge auf einer Innenfläche des Materialabschnitts zu bilden, **dadurch gekennzeichnet, dass** jede der mehreren Aussparungen (19, 41, 71) sich in Richtung einer Spitze verschmälert und teilweise durch eine erste und eine dieser im Wesentlichen gegenüberliegende zweite Fläche definiert wird, so dass die Aussparung (19, 41, 71) eine asymmetrische Form hat; und
Bilden einer Öffnung (23, 73) an der Spitze von jeder der mehreren Aussparungen (19, 41, 71).

## Revendications

1. Récipient pour plantes (13, 65) comprenant au moins une section de matériau, ladite au moins une section de matériau étant configurée pour définir un espace avec une extrémité de réception de plantes (27), ladite au moins une section de matériau présentant une surface interne et une surface externe, la surface interne définissant une pluralité d'évidements (19, 71), dont chacun se rétrécit vers une ouverture (23, 73), et une pluralité de saillies (21, 75), **caractérisé en ce que** chaque évidement (19, 71) est défini en partie par une première (22) et une seconde (24) surfaces sensiblement opposées de sorte que l'évidement (19, 71) a une forme asymétrique.

2. Récipient pour plantes (13, 65) selon la revendication 1, dans lequel chaque évidement (19, 71) définit une seconde ouverture à partir de laquelle l'évidement se rétrécit vers la première ouverture (23, 73) et dans lequel chaque évidement (19, 71) est configuré de telle sorte que la première (23, 73) et la seconde ouvertures sont disposées de façon excentrique l'une par rapport à l'autre.

3. Récipient pour plantes (13, 65) selon la revendication 1 ou 2, dans lequel chaque saillie (21, 75) a une forme asymétrique.

4. Récipient pour plantes (13, 65) selon l'une quelconque des revendications précédentes, dans lequel la pluralité de saillies (21, 75) est répartie parmi la pluralité d'évidements (19, 71), et la première et la seconde surfaces de chaque évidement (19, 71) sont formées au moins en partie par des surfaces de saillies (21, 75).

5. Récipient pour plantes (13, 65) selon l'une quelconque des revendications précédentes, dans lequel l'un au moins des postes suivants, à savoir la pluralité d'évidements (19, 71) et la pluralité de saillies (21, 75), est formé en tant que groupe, alors que des évidements adjacents (19, 71) du groupe d'évidements (19, 71) sont espacés de façon sensiblement régulière l'un de l'autre et que des saillies adjacentes (21, 75) du groupe de saillies (21, 75) sont espacées de façon sensiblement régulière l'une de l'autre, chacun des groupes, à savoir le groupe d'évidements (19, 71) et le groupe de saillies (21, 75) comportant une pluralité de rangées et une pluralité de colonnes, et les saillies (21, 75) étant en alternance dans le groupe avec les évidements (19, 71).

6. Récipient pour plantes (13, 65) selon la revendication 5, dans lequel l'une de la pluralité de rangées et de colonnes d'évidements (19, 71) n'est pas en alignement avec une pluralité correspondante adjacente de rangées et de colonnes de saillies (21, 75).

7. Récipient pour plantes (13, 65) selon la revendication 6, dans lequel chaque saillie (21, 75) est plus proche d'un premier évidement (19, 71) qu'un second évidement (19, 71), les premier et second évidements se trouvant en position adjacente et dans la même rangée d'évidements (19, 71).

8. Récipient pour plantes (13, 65) selon l'une quelconque des revendications 5 à 7, dans lequel chaque rangée de la pluralité de rangées de l'un au moins des postes suivants, à savoir les évidements (19, 71) et les saillies (21, 75) s'étend dans le plan diagonal en travers de la section de matériau.

9. Récipient pour plantes (13, 65) selon l'une quelconque des revendications 1 à 5, dans lequel l'un au moins des postes suivants, à savoir la pluralité d'évidements (19, 71) et la pluralité de saillies, est formé en tant que groupe, l'un au moins des évidements (19, 71) du groupe d'évidements (19, 71) et l'une au moins des saillies (21, 75) du groupe de saillies (21, 75) étant en espacement irrégulier l'un par rapport à l'autre, chacun des groupes, à savoir le groupe d'évidements (19, 71) et le groupe de saillies (21, 75) comprenant une pluralité de rangées et une pluralité de colonnes, et alors que l'une de la pluralité de rangées et de colonnes d'évidements (19, 71) n'est pas en alignement avec une pluralité correspondante adjacente de rangées et de colonnes de saillies (21, 75).

10. Récipient pour plantes (13, 65) selon la revendication 9, dans lequel chaque saillie (21, 75) est plus proche d'un premier évidement (19, 71) qu'un second évidement, les premier (19, 71) et second évidements se trouvant en position adjacente et dans une même rangée d'évidements.

11. Récipient pour plantes (13, 65) selon la revendication 9 ou 10, dans lequel l'espacement entre des évidements adjacents (19, 71) augmente progressivement depuis un côté de la section de matériau vers un côté opposé de la section de matériau.

12. Récipient pour plantes (13, 65) selon l'une quelconque des revendications 9 à 11, dans lequel l'espacement entre des saillies adjacentes (21, 75) augmente progressivement depuis un côté de la section de matériau vers un côté opposé de la section de matériau.

13. Récipient pour plantes (13, 65) selon l'une quelconque des revendications 9 à 12, dans lequel une largeur de chaque élément de l'un au moins des postes suivants :
la pluralité d'évidements (19, 71) ; et la pluralité de saillies (21, 75) augmente progressivement en travers de la section de matériau.

14. Au moins une section de matériau (31, 37) destinée à former un récipient pour plantes, ladite au moins une section de matériau (31, 37) présentant une surface interne et une surface externe, la surface interne définissant une pluralité d'évidements (19, 41), dont chacun se rétrécit vers une ouverture (23), et une pluralité de saillies (21, 39), **caractérisée en ce que** chaque évidement (19, 41) est défini en partie par une première et une seconde surfaces sensiblement opposées de sorte que l'évidement (19, 41) a une forme asymétrique.

15. Procédé de formage d'une section de matériau (31, 37) qui est configurée pour être formée comme récipient pour plantes (13, 65), le procédé comprenant les étapes consistant à :
déformer une section de matériau déformable afin de former une pluralité d'évidements (19, 41, 71) et une pluralité de saillies sur une surface interne de la section de matériau, **caractérisé en ce que** chaque évidement de la pluralité d'évidements (19, 41, 71) se rétrécit vers un sommet et est défini en partie par une première et une seconde surfaces sensiblement opposées de sorte que l'évidement (19, 41, 71) a une forme asymétrique ; et
ménager une ouverture (23, 73) au niveau du sommet de chaque évidement de la pluralité d'évidements (19, 41, 71).
